Europäisches Patentamt

European Patent Office

Office européen des brevets

(19)

(11) EP 0 693 705 A1

(12) EUROPEAN PATENT APPLICATION

(43) Date of publication:
24.01.1996 Bulletin 1996/04

(51) Int Cl.⁶: G03B 17/24

(21) Application number: 95304814.7

(22) Date of filing: 10.07.1995

(84) Designated Contracting States:
DE FR GB

(30) Priority: 15.07.1994 JP 163453/94

(71) Applicant: NIKON CORPORATION
Tokyo (JP)

(72) Inventors:
• Hibino, Hideo
  Kawasaki-shi, Kanagawa-ken (JP)
• Kazami, Kazuyuki
  Tokyo (JP)
• Yokonuma, Norikazu
  Yokohama-shi, Kanagawa-ken (JP)
• Okutsu, Hisashi
  Yokohama-shi, Kanagawa-ken (JP)

(74) Representative: Burke, Steven David et al
London SW1H 0RJ (GB)

(54) Apparatus capable of magnetically recording data on reader segment of film

(57) An apparatus magnetically recording data on a reader segment (10A) of a film (10) formed with perforations, comprises a feeding unit for feeding the film, a perforation detecting unit (2) for detecting the perforation, a timing determining unit for determining a timing of recording the data on the reader segment of the film when the feeding unit feeds the film on the basis of a result of the perforation detection by the perforation detecting unit, and a magnetic recording unit (3) for magnetically recording the data on the reader segment of the film at the timing determined by the timing determining means.

FIG. 4

EP 0 693 705 A1

**Description**

BACKGROUND OF THE INVENTION

Field of the Invention

The present invention relates generally to an apparatus for recording data on a magnetic record area of a film and reproducing the recorded data and, more particularly, to an apparatus capable of magnetically recording the data on a film reader segment formed with perforations.

Related Background Art

A known camera (see, e.g., Japanese Patent Application Laid-Open No. 4-328536) capable of performing a magnetic record on a film includes two perforation detecting units for detecting perforations of the film, wherein there are determined a recording frequency and a start-of-magnetic-record timing on the basis of a perforation detection signal by the first detecting unit and also stop-of-magnetic-record timing and a stop-of-film-feed timing on the basis of a perforation detection signal by the second detecting unit.

Further, according to a normal wind type camera, an exposure is conducted while rewinding the film frame by frame on a mechanism of the camera. As compared with this type of camera, there is known a prewind type camera in which the film is all wound on the mechanism of the camera, and the exposure is executed while rewinding the film frame by frame back into a cartridge.

By the way, in the camera including the above-mentioned two perforation detecting units and magnetically recording the data on each photographing frame, the photographing data about the whole film such as a film title, etc. are to be recorded on a reader segment of the film as the case may be. In this case, if the magnetic record is executed when in a so-called thrust operation of feeding the film out of a loaded cartridge, it is impossible to record, on the reader segment, the data determined after finishing the photographing of all the frames as in the case of the film title.

SUMMARY OF THE INVENTION

It is a primary object of the present invention to provide an apparatus capable magnetically recording data on a reader segment of a film when rewound as in the same way with thrusting.

To accomplish the above object, according to the present invention, an apparatus magnetically recording data on a reader segment of a film formed with perforations comprises a feeding unit for feeding the film, a perforation detecting unit for detecting the perforation, a timing determining unit for determining a timing of recording the data on the reader segment of the film when the feeding unit feeds the film on the basis of a result of the perforation detection by the perforation detecting unit and a magnetic recording unit for magnetically recording the data on the reader segment of the film at the timing determined by the timing determining unit.

Preferably, the film is accommodated in a film cartridge. The feeding unit has a take-up spool, and the perforation detecting unit includes a first perforation detection circuit disposed on the side of the film cartridge on the basis of a predetermined position and a second perforation detection unit disposed on the side of the take-up spool on the basis of the predetermined position. The timing determining unit determines a start-of-record timing when rewinding the film on the basis of a result of the detection by the second perforation detection circuit and determines an end-of-record timing when rewinding the film on the basis of a result of the detection by the first perforation detection circuit. The magnetic recording unit magnetically records the data on the reader segment of the film when rewinding the film at a timing determined by the timing determining unit.

Further, the timing determining unit preferably detects a speed of rewinding the film on the basis of a result of the detection by the second perforation detection circuit and determines a frequency of recording the data on the basis of the rewinding speed.

Moreover, the timing determining unit determines a start-of-record timing when rewinding the film on the basis of a result of the detection by the first perforation detection circuit and determines an end-of-record timing when rewinding the film on the basis of a result of the detection by the second perforation detection circuit. It is also preferable that the magnetic recording unit magnetically records the data on the principal portion of the film when rewinding the film at a timing determined by the timing determining unit.

The timing of recording the data on the reader segment of the film when feeding the film is determined based on the result of the detection by the perforation detecting unit. The data are magnetically recorded at this timing. Normally, this perforation detecting unit is used for magnetically recording the photographing data with respect to the respective photographing frames of the film, and start- and end-of-data-record timings are determined based on the result of detecting the perforations. Such a perforation detecting unit also serves to record the data on the film reader segment. The start- and end-of-data-record timings on the reader segment are determined based on the result of detecting the perforations, and the magnetic record on the reader segment is effected in accordance with these timings. With this operation, the magnetic record on the film reader segment can be performed without providing a special device.

For example, a first perforation detection circuit is disposed on the side of a film cartridge with respect to an aperture in the camera, and, at the same time, a second perforation detection circuit is disposed on the side of a take-up spool. The start- and end-of-data-record timings with respect to the individual photographing frames are determined based on the results of the detections by the first and second perforation detection circuits. Further, in the case of performing the magnetic record on the reader segment when rewound, a record frequency and a start-of-record timing are determined based on the result of the detection by the second perforation detection circuit, and, at the same time, an end-of-record timing is determined based on the result of the detection by the first perforation detection circuit. On the other hand, in the case of effecting the magnetic record on the principal portion of the film when wound up, the start-of-record timing is determined based on the result of the detection by the first perforation detection circuit, and, at the same time, the end-of-record timing is determined based on the result of the detection by the second perforation detection circuit. With this operation, the first and second perforation detecting circuits for the magnetic record for the respective frames also serve to perform the magnetic record on the reader segment, and the magnetic record on the reader segment of the film is conducted when rewound as in the same way with rewinding (thrusting).

The above and other objects, features and advantages of the present invention are explained hereinafter and may be better understood by reference to the drawings and the descriptive matter which follows.

BRIEF DESCRIPTION OF THE DRAWINGS

Fig. 1 is a functional block diagram illustrating a construction of one embodiment of the present invention;

Fig. 2 is a diagram showing a reader segment of a film formed with a magnetic record area;

Fig. 3 is a diagram showing edge names of respective perforations;

Fig. 4 is a diagram illustrating magnetic record areas of respective photographing frames and magnetic record areas of the reader segment;

Figs. 5A to 5E are explanatory diagrams showing a magnetic recording operation when in a normal state;

Figs. 6A to 6D are explanatory diagrams showing a magnetic recording operation when in an abnormal state;

Figs. 7A to 7C are explanatory diagrams showing the magnetic recording operation on the film reader segment;

Figs. 8A to 8C are explanatory diagrams showing the operation of magnetically recording data on the film reader segment when thrust; and

Fig. 9 is comprised of Figs. 9A to 9E showing flowcharts illustrating a control program of a microcomputer.

DETAILED DESCRIPTION OF THE PREFERRED EMBODIMENTS

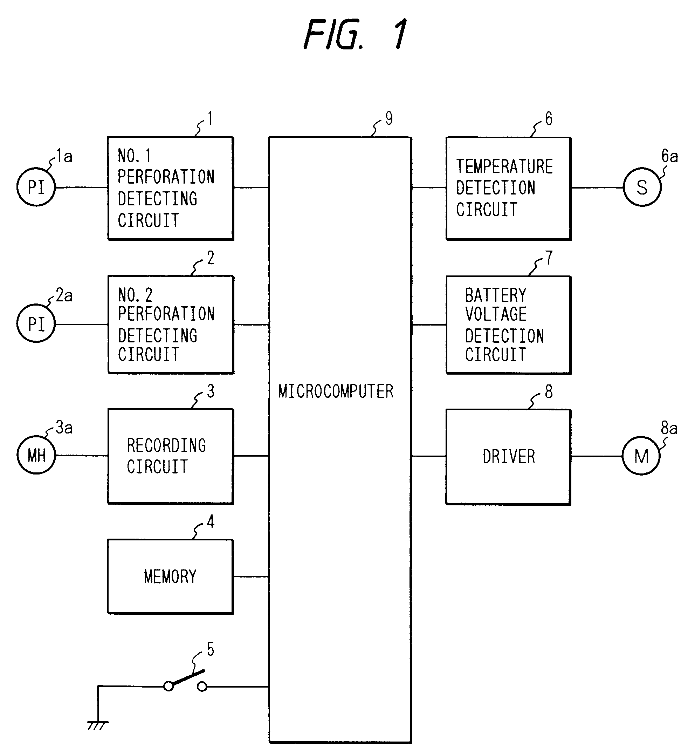

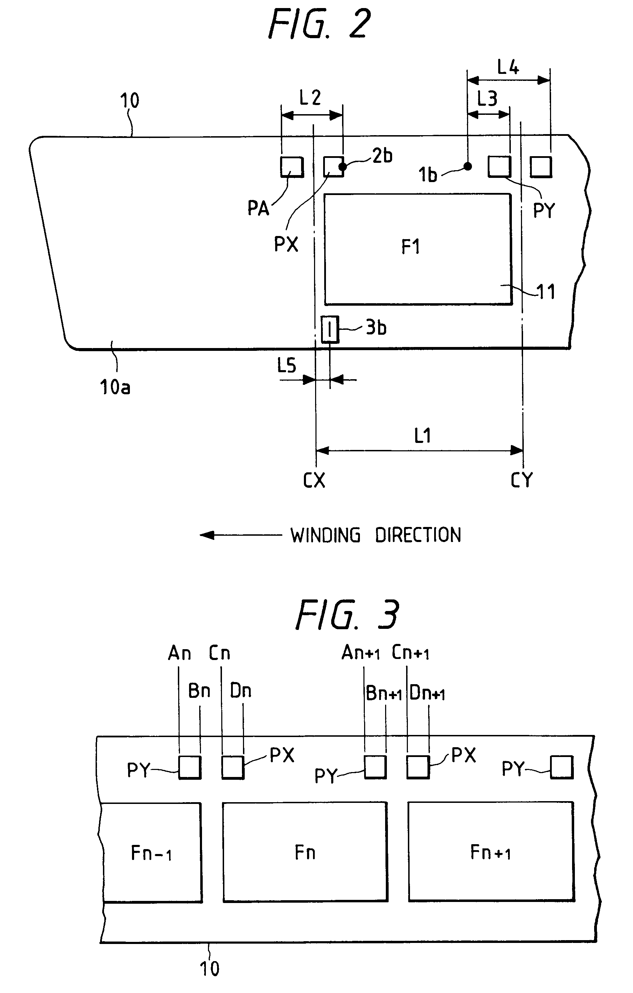

Fig. 1 is a functional block diagram showing a construction of one embodiment of the present invention. Fig. 2 is a diagram illustrating a reader segment of a film formed with a magnetic record area.

A photo interrupter 1a of a perforation detection circuit 1 detects perforations of the film. Similarly, a photo interrupter 2a of a perforation detecting circuit 2 detects the perforations. An explanation of this embodiment will be given by taking an example of a film 10 where two perforations are formed per photographing frame as shown in Fig. 2. This embodiment will be further discussed by exemplifying a normal wind type camera in which photographing is performed while winding up the film 10 frame by frame on a mechanism of the camera. Based on a result of detecting the perforations by the perforation detecting circuit 1, there are determined a timing of detecting a feeding speed with respect to each photographing frame, a timing of starting a magnetic record and a timing of finishing the magnetic record with respect to a reader segment 10a of the film 10. Based further on a result of detecting the perforations by the perforation detecting circuit 2, there are determined a timing of finishing the magnetic record with respect to each photographing frame, a timing of halting a feed of the film, a timing of detecting a feeding speed with respect to the reader segment 10a and a timing of starting the magnetic record. Note that a recording frequency is set based on the detected feeding speed. Incidentally, film areas exclusive of the reader segment are termed a principal portion.

A recording circuit 3 records various items of data on a magnetic record area corresponding to each photographing frame of the film 10 and a magnetic record area of the reader segment 10a by driving a magnetic head 3a. A memory 4 stores data about the photography and photographing frame numbers and is switched ON upon performing a release operation of an unillustrated release button. Further, a temperature detection circuit 6 includes a sensor 6a which detects an ambient temperature. A battery voltage detection circuit 7 detects a terminal voltage of the battery. A driver 8 drives a film feeding motor 8a to wind up and rewind the film 10.

A microcomputer 9 determines the detection timing of the film feeding speed and the start- and end-of-magnetic-record timings on the basis of the perforation detecting signals given from the perforation detecting circuits 1, 2. The microcomputer 9 also detects a frame number set in a predetermined photographing position on the basis of the perforation detecting signal and changes the detection timing of the feeding speed and the start-of-magnetic-record timing on the basis of the detected battery voltage as well as on the detected ambient temperature.

A feeding load of the film becomes larger with a transition closer to the last frame, and, hence, stabilizing the feeding speed is time-consuming when feeding the film after the photography, resulting in an increased film feed quantity. Then, if over a preset photographing frame number, there are delayed the detection timing of the film feeding speed and the start-of-magnetic-record timing.

Further, if the ambient temperature is lowered, a performance of the battery decreases, and, at the same time, the load on the film feed increases. Therefore, the stabilization of the feeding speed is time-consuming when feeding the film after the photography, resulting in the increased film feed quantity. Then, if under a preset ambient temperature, there are delayed the detection timing of the film feeding speed and the start-of-magnetic-record timing.

Further, if a residual capacity of the battery is reduced, stabilizing the feeding speed is time-consuming when feeding the film after the photography, resulting in the increased film feed quantity. The residual capacity of the battery is substantially proportional to the terminal voltage, and, hence, if under a predetermined terminal voltage, there are delayed the detection timing of the film feeding speed and the start-of-magnetic-record timing.

Fig. 2 illustrates a state where a first photographing frame F1 within the principal portion of the film 10 is set in a predetermined photographing position, i.e., in a face-to-face position of an aperture of the camera, wherein 1b represents a perforation detection position of a photo interrupter 1a, 2b denotes a perforation detection position of the photo interrupter 2a, and 3b designates a record position by the magnetic head 3a. That is, the photo interrupter 1a is disposed on the side of a film cartridge (unillustrated) with respect to the aperture of the camera (unillustrated), while the photo interrupter 2a and the magnetic head 3a are disposed on the side of a take-up spool (unillustrated) with respect to the aperture. Note that the symbol PX designates a perforation on the side of the reader segment of each photographing frame, and PY represents a perforation on the opposite side in the following discussion. Further, the symbol PA denotes the perforation of the reader segment 10a. Moreover, let F1 be a first frame and F2 be a second frame in connection with the photographing frames, and hereinbelow similarly the n-th frame is referred to as Fn. The symbols CX, CY represent central positions between the frames adjacent to each other. More specifically, CX is the central position on the side of the reader segment, while CY is the central position on the opposite side with respect to each photographing frame. The symbol CX - CY represents an interval between the central positions CX, CY, i.e., L1 denotes an frame-to-frame distance. Further, let L2 be a distance from a front edge of the perforation PA in a film winding direction to rear edge of the perforation of the first frame F1. When each photographing frame of the film 10 is set in a predetermined photographing position, the rear edge of the perforation PX of each photographing frame exists substantially in the detecting position 2b of the photo interrupter 2a. Further, let L3 be a distance between the detecting position 1b and the rear edge of the perforation PY and L4 be a distance between the detection position 1b and the rear edge of the perforation PX of the next photographing frame. In accordance with this embodiment, the record position 3b of the magnetic head 3a is set apart a distance L5 from the central position CX between the adjacent frames on the opposite side to the reader segment 10a.

For an explanatory clarity, the description will hereinafter be given by marking the edges of the respective perforations with the symbols as shown in Fig. 3. Let An be a front edge of the perforation PY of a photographing frame Fn-1 anterior to an arbitrary photographing frame Fn (n = 1, 2, ..) and Bn be a rear edge thereof. Further, let Cn be a front edge of the perforation PX of the photographing frame Fn and Dn be a rear edge thereof. Let An+1 be a front edge of the perforation PY and Bn+1 be a rear edge thereof. Moreover, let Cn+1 be a front edge of the perforation PX of a photographing frame Fn+1 next to the photographing frame Fn and Dn+1 be a rear edge thereof.

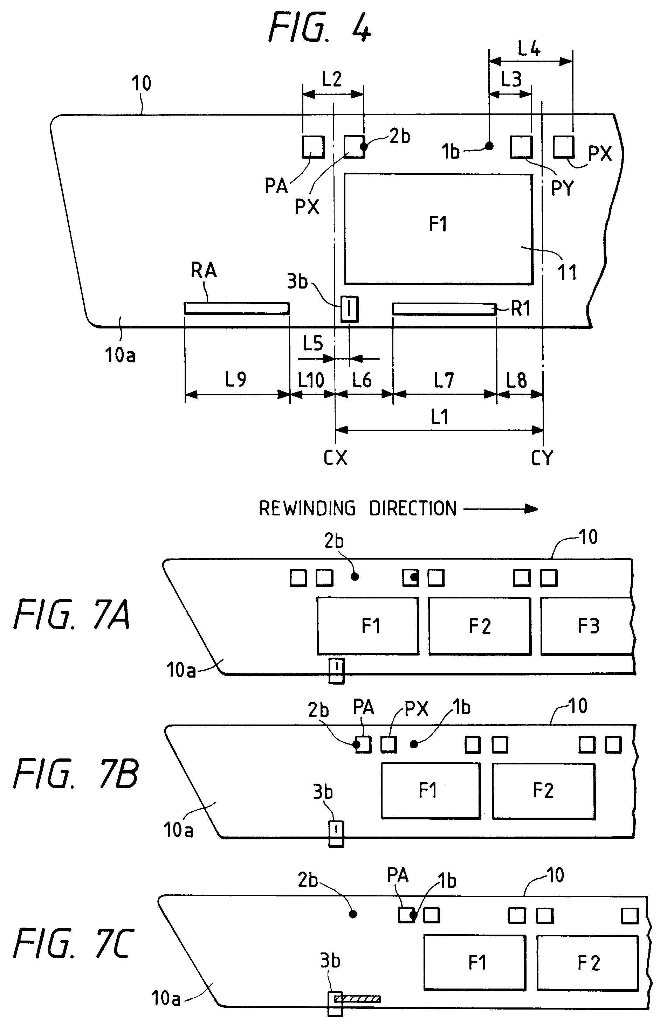

Fig. 4 illustrates a magnetic record area of each photographing frame and a magnetic record area of the reader segment. A magnetic record area Rn of the photographing frame Fn is an area having a length L7, wherein its front edge corresponds to a position of a distance L6 from the central position CX between the adjacent frames. Note that L8 represents a distance from the rear edge of the magnetic record area Rn to the central position CY between the adjacent frames.

On the other hand, a magnetic record area RA of the film reader segment 10a is an area having a length L9 which extends from a position apart a distance L10 from the central position CX of the first photographing frame F1. Note that a central position, when assuming that the photographing does not, as a matter of fact, exist before the first photographing frame F1, but the Oth frame exists anterior to the first frame F1, between these frames is the central position CX of the first frame F1.

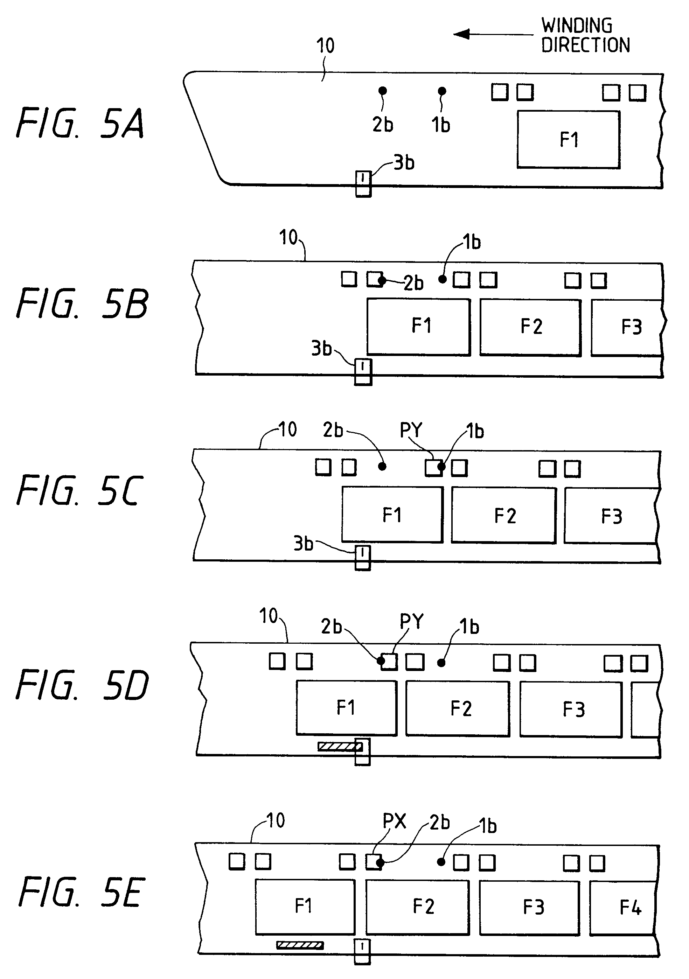

Referring to Figs. 5A through 5E, there will be given an explanation of the magnetic recording operation when feeding the film after the photography in a normal case, more specifically, in the case of being under a set photographing frame number, over a set ambient temperature and over a set battery terminal voltage.

After loading a film cartridge into the camera, feeding the film is started (see Fig. 5A), and an exposure is carried out by setting the first frame F1 in a predetermined photographing position (see Fig. 5B). When feeding the film after the photography, a timer measures a feeding time from a timing at which a front edge A2 of the perforation PY passes the detection position 1b of the photo interrupter 1a to a timing at which a rear edge B2 of the perforation PY passes the detection position 1b (see Fig. 5C). Then, a film feeding speed is calculated based on a length between these perforations and the feeding time. Subsequently, a recording frequency is set corresponding to the feeding speed as a result of this calculation, and the magnetic record is started at this recording frequency. Note that the calculation of the film feeding speed and the determination of the recording frequency take a very short period of time, and, therefore, the timing at which the edge B2 passes the detection position 1b may be conceived as a start-of-magnetic-record timing.

After starting the magnetic record, as illustrated in Fig. 5D, the recording operation is ended at the timing when the front edge A2 of the perforation PY passes the detection position 2b, and, at the same time, the film feeding speed is reduced by starting a duty drive of the feed motor 8a. At this moment, the magnetic record has been finished before starting a film duty drive, and hence there is no possibility in which the data fail to be recorded because of effecting the magnetic record during the deceleration. Note that the timing at which the edge A2 passes the detection position 2b is a timing of forcibly finishing the recording operation for a duration of the recording operation up to the former timing, and, normally, the recording operation is to be ended up to that time. Feeding the film 10 is stopped at the timing (see Fig. 5E) when the rear edge D2 of the perforation PX of the second frame F2 passes the detection position 2b of the photo interrupter 2a. This position is a predetermined photographing position of the second frame F2.

Considered herein is a length of the magnetic record area R1 when effecting the normal recording operation shown in Figs. 5A to 5E.

A feeding quantity of the film 10 from the start of the film feed after the photography to the start of the magnetic record corresponds to a distance at which the film 10 moves from a state of Fig. 5B to a state of Fig. 5C with respect to the detection position 1b and is therefore L3 as shown in Fig. 4. Accordingly, a distance L6 from the central position CX to a position of the front edge of the record area R1 is given by:

$$L6 = L5 + L3 \qquad (1)$$

Further, a feeding quantity from an end-of-magnetic-record position to a stop position of the film 10 corresponds to a distance at which the film 10 moves from a state shown in Fig. 5D to a state shown in Fig. 5E with respect to the detection position 2b and is therefore L2 illustrated in Fig. 4. Accordingly, a distance L8 from the end-of-magnetic-record position to the central position CY relative to the next frame F2 is expressed such as:

$$L8 = L2 - L5 \qquad (2)$$

Moreover, as obvious from Fig. 4, a length L7 of the record area R1 is given by:

$$L7 = L1 - L6 - L8 \qquad (3)$$

From the formulae (1) to (3), the length L7 of the record area R1 is also expressed such as:

$$L7 = L1 - L2 - L3 \qquad (4)$$

The length L7 of the record area R1 during the normal recording operation is given by subtracting, from the length L1 of one frame, the length L3 from the start of the film feed after the photography to the start of the magnetic record and the length L2 from the end-of-magnetic-record position to the stop position of the film.

Note that the length L7 of the record area R1 of the first frame F1 has been calculated, but the length L7 of the record area Rn of other photographing frame Fn turns out a value shown by the formula (4) during such a normal recording operation that the photographing frame number is the set frame number or smaller, the ambient temperature is the set temperature or higher, and the battery terminal voltage is the set voltage or larger.

Further, as apparent from the discussion made so far, the position of the magnetic record area Rn with respect to each photographing frame Fn can be changed by shifting the position 3b of the magnetic head 3a.

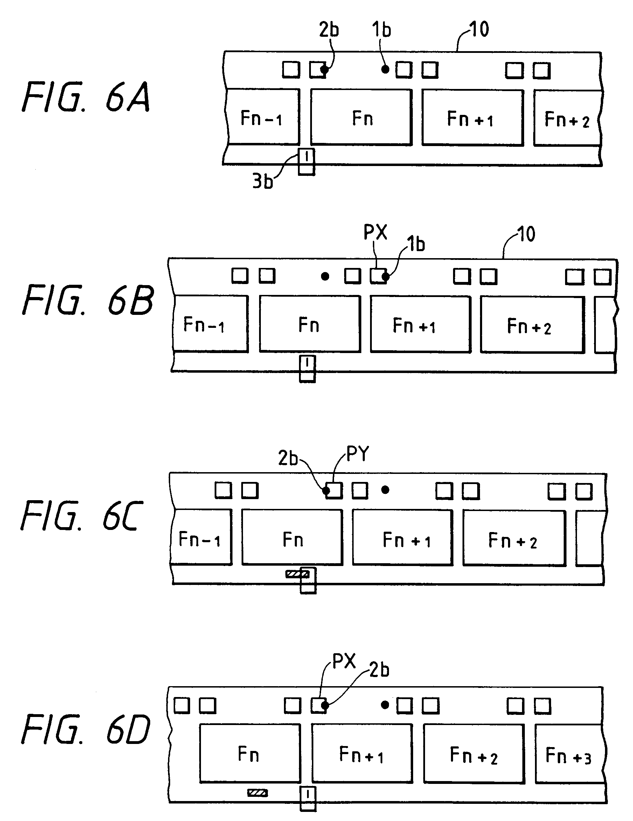

Next, if at least one or more conditions are established among the conditions of exceeding the set photographing frame number, being under the set ambient temperature and under the set battery terminal voltage (this will hereinafter be termed an abnormal time versus the above-mentioned normal time), the magnetic recording operation when feeding the film after the photography will be explained with reference to Figs. 6A to 6D.

Now, as illustrated in Fig. 6A, it is assumed that the photographing frame Fn is exposed in a predetermined photographing position. When feeding the film after the photography, the timer measures a feeding time from a timing at which the front edge Cn+1 of the perforation PX of the (Fn+1)th frame passes the detection position 1b of the photo interrupter 1a to a timing at which the rear edge Dn+1 of the perforation PX passes the detection position 1b (see Fig. 6B). Then, a film feeding speed is calculated based on a length between these perforations and the feeding time. Subsequently, a recording frequency is set corresponding to the feeding speed as a result of this calculation, and the magnetic record is started at this recording frequency.

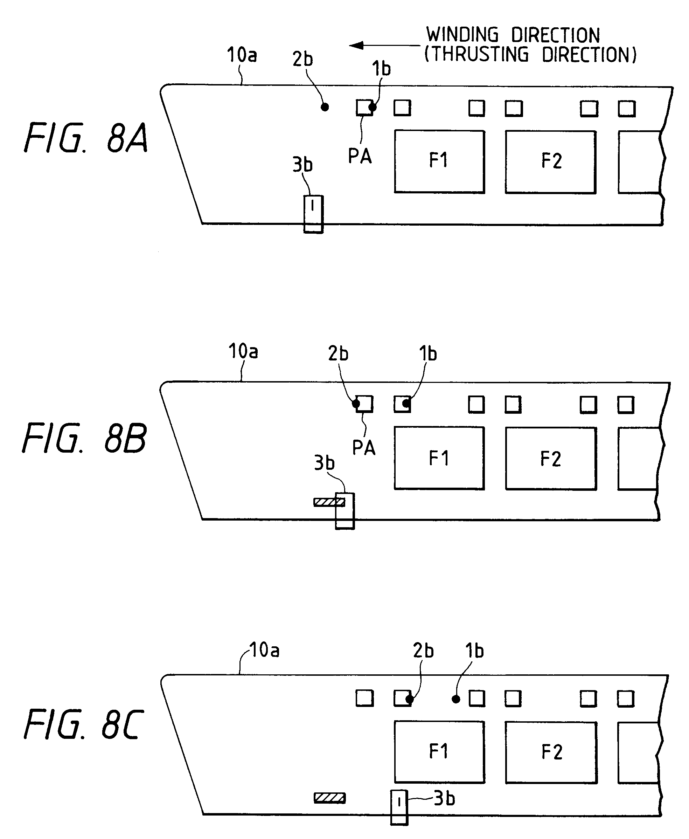

After starting the magnetic record, as illustrated in Fig. 6C, the recording operation is ended at the timing when the front edge An+1 of the perforation PY passes the detection position 2b, and, at the same time, the film feeding speed is reduced by starting the duty drive of the feed motor 8a. At this moment, the magnetic record has been finished before starting the film duty drive, and hence there is no possibility in which the data fail to be recorded because of effecting the magnetic record during the deceleration. Note that the timing at which the front edge An+1 of the perforation PY passes the detection position 2b is a timing of forcibly finishing the recording operation for a duration of the recording operation up to the former timing, and, normally, the recording operation is to be ended up to that time. Feeding the film 10 is stopped at the timing (see Fig. 6D) when the rear edge Dn+1 of the perforation PX of the (n+1)th frame Fn+1 passes the recording position 2b of the photo interrupter 2a. Namely, this position is a predetermined photographing position of the (n+1)th frame Fn+1.

Considered herein is a length of the magnetic record area Rn when effecting the normal recording operation at the abnormal time shown in Figs. 6A to 6D.

A feeding quantity of the film 10 from the start of the film feed after the photography to the start of the magnetic record corresponds to a distance at which the film 10 moves from a state of Fig. 6A to a state of Fig. 6B with respect to the detection position 1b and is therefore L4 shown in Fig. 4. Accordingly, a distance L6 from the central position CX to a position of the front edge of the record area Rn is given by:

$$L6 = L5 + L4 \qquad (5)$$

Further, a feeding quantity from an end-of-magnetic-record position to a stop position of the film 10 corresponds to a distance at which the film 10 moves from a state shown in Fig. 6C to a state shown in Fig. 6D with respect to the detection position 2b and is therefore L2 as illustrated in Fig. 4. Accordingly, the distance L8 from the end-of-magnetic-record position to the central position CY relative to the next frame Fn+1 is expressed such as:

$$L8 = L2 - L5 \qquad (6)$$

Moreover, as obvious from Fig. 4, the length L7 of the record area Rn is given by:

$$L7 = L1 - L6 - L8 \qquad (7)$$

From the formulae (5) to (7), the length L7 of the record area Rn is also expressed such as:

$$L7 = L1 - L2 - L4 \qquad (8)$$

The length L7 of the record area Rn at the abnormal time is shorter by (L4 - L3) than the length at the normal time as shown in the formula (4).

Note that the end-of-detection timing of the feeding speed at the normal time and the start-of-magnetic-record timing are set at a timing when an edge Bn+1 passes the detection position 1b, while the end-of-detection timing of the feeding speed at the abnormal time and the start-of-magnetic-record timing are set at a timing when the edge Dn+1 passes the detection position 1b in the embodiment discussed above. In the camera wherein the feeding speed is stabilized without waiting the edge Dn+1 at the abnormal time, however, the magnetic record may be started after detecting the feeding speed at a Bn+1-to-Cn+1 interval. In this case, as compared with the above-discussed embodiment, the length of the magnetic record area can be increased by one perforation.

Further, the detection timing of the feeding speed can be changed according to each of the conditions such as the photographing frame number, the ambient temperature and the battery voltage.

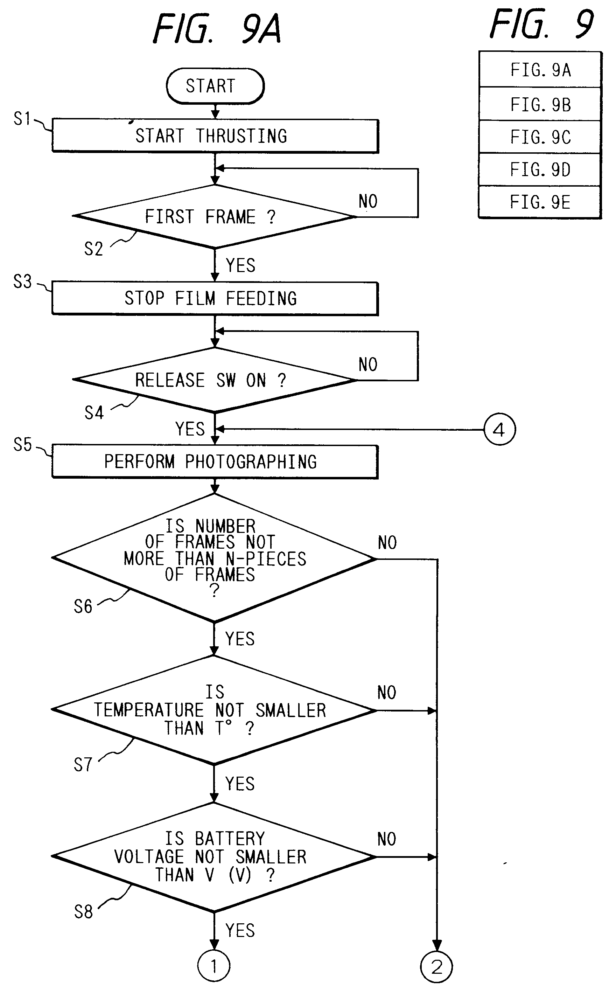

Next, the magnetic recording operation on the film reader segment according to the normal wind type camera will be described with reference to Figs. 7A to 7C.

In accordance with this embodiment, the magnetic record is effected on the film reader segment 10a when rewinding the film 10 back into the cartridge. As illustrated in Fig. 7A, the film 10 is rewound up to an area proximal to the reader segment 10a, and the timer measures a feeding time from a timing at which an edge D1 passes the detection position 2b of the photo interrupter 2a to a timing at which an edge C1 passes the detection position 2b thereof. Then, a film feeding speed is calculated based on a length between these perforations and the feeding time, and a recording frequency corresponding to the feeding speed is set. Subsequently, the magnetic record is started at the recording frequency as a result of the calculation at the timing (see Fig. 7B) when the edge A1 passes the detection position 2b. After starting the magnetic record, as illustrated in Fig. 7C, the magnetic record is ended at the timing when the edge B1 passes the detection position 1b of the photo interrupter 1a. Thereafter, the rewinding of the film continues, and the film 10 is completely rewound back into the cartridge. Note that the timing at which the edge B1 passes the detection position 1b is a timing of forcibly finishing the recording operation when the recording operation continues up to the former timing, and, normally, the recording is to be ended up to that time.

Herein according to the normal wind type camera, the photographing is conducted while winding up the film frame by frame on the mechanism of the camera, and, at the same time, the photographing data per frame are recorded on the magnetic record area when feeding the film after the photography. In this type of camera, if the as-is data are recorded on the reader segment of the film when rewound, a recording direction of the data on the reader segment is reverse to a recording direction of the data of the respective frames, and, when reproduced, the reader segment and the data of the respective frames have to be read respectively by switching the feeding direction of the film. Then, when recording the data on the reader segment during the rewinding in the normal wind type camera, the data are recorded while reversing a sequence of the data to be recorded. That is, the record starts from the last item of data. Normally, the data magnetically recorded on the film are digitized data, and therefore the data to be recorded are temporarily stored in a memory and may be recorded by reading the last item of data.

Note that the photography is performed while rewinding the film frame by frame back into the cartridge, and, at the same time, the photographing data per frame are recorded on the magnetic record areas when feeding the film after the photography according to a prewind type camera. The data recording directions of the reader segment and of the respective frames are equalized even in the case of the recording the data on the reader segment when rewound in this type camera, with the result that no such problem described above is caused. If magnetically recorded on the reader segment when rewinding the film in the prewind type of camera, however, the data recording directions of the reader segment and of the respective frames are reverse to each other, and, hence, the magnetic record on the reader segment starts from the last item of data.

Considered is a length L9 of the magnetic record area RA in the case of effecting the magnetic record on the reader segment when rewound in the above-mentioned normal wind type camera.

As obvious from Fig. 4, a distance L10 from the central position CX to a position of the front edge of the magnetic record area RA of the reader segment 10a is given by:

$$L10 = L2 - L5 \qquad (9)$$

Hence, from the formula (6), this goes as follows:

$$L10 = L8 \qquad (10)$$

Further, the length L9 of the record area RA is expressed such as:

$$L9 = L1 - L2 - L3 \qquad (11)$$

Hence, from the formula (4), this goes as below:

$$L9 = L7 \qquad (12)$$

It is therefore possible to set the magnetic record area RA having the same length at the same pitch as those of the magnetic record area Rn of each normal photographing frame Fn.

Note that the magnetic record on the film reader segment 10a is conducted during the rewinding of the film 10, and consequently there are eliminated the necessity for starting the film feed, the deceleration by the duty drive and halting the feed as in the case of the magnetic record of each photographing frame. Thus, if the start-of-record timing is set faster, and whereas if the end-of-record timing is delayed, it is possible to set larger than the length of the magnetic recording area with respect to each photographing frame.

For instance, the magnetic record is started at the timing when the edge A1 passes the detection position 2b in the embodiment discussed above. However, if the magnetic record is started at the timing when the edge B1 passes the detection position 2b, the record area can be lengthened by a length of one perforation.

Further, the magnetic record is ended at the timing when the edge B1 passes the detection position 1b in the embodiment discussed above. However, if the magnetic record is ended at the timing when the edge A1 passes the detection position 1b, the record area can be further lengthened by the length of one perforation.

Thus, the position and the length of the magnetic record area can be varied by changing the start- and end-of-record timings, and magnetic record area optimal to each of the cameras can be set.

Incidentally, the position of the magnetic record area of the reader segment 10a can be shifted by shifting the record position 3b of the magnetic head 3a. In this case, however, it follows that the magnetic record are of each photographing frame can be also varied.

Further, in accordance with the embodiment discussed above, the feeding speed of the reader segment is detected in the D1-to-C1 section. However, the detection timing of the feeding speed of the reader segment is not limited to the above embodiment, and an accuracy thereof can be enhanced by a measurement in a bit longer range.

According to the embodiment described above, the data are recorded on the reader segments of the film when rewound in the normal wind type camera but can be also recorded on the reader segment when effecting the thrust operation till the first frame is set in the predetermined photographing position by feeding the film out of the already-loaded cartridge.

Figs. 8A to 8C are explanatory diagrams each showing the operation of recording the data on the reader segment when performing the thrust operation. When a rear cover of the camera is closed after loading the film cartridge into the camera, the thrust operations starts. The timer measures a feeding time from a timing at which the edge A1 passes the detection position 1b of the photo interrupter 1a to a timing at which the edge B1 passes the detection position 1b (see Fig. 8A). Then, a film feeding speed is calculated based on a length between these perforations and the feeding time. Subsequently, a recording frequency corresponding to the feeding speed is determined, and the magnetic record is started. After starting the magnetic record, as illustrated in Fig. 8B, the recording operation is ended at the timing when the front edge A1 passes the detection position 2b of the photo interrupter 2a, and, at the same time, the duty drive of the film 10 is started. Note that this end-of-magnetic-record timing is a timing of forcibly finishing the recording operation for a duration of this recording operation up to the former timing, and, normally, the recording operation is to be ended up to that time. Next, as illustrated in Fig. 8C, feeding the film 10 is stopped at the timing when the edge D1 passes the detection position 2b. Namely, this position is a predetermined photographing position of the first frame.

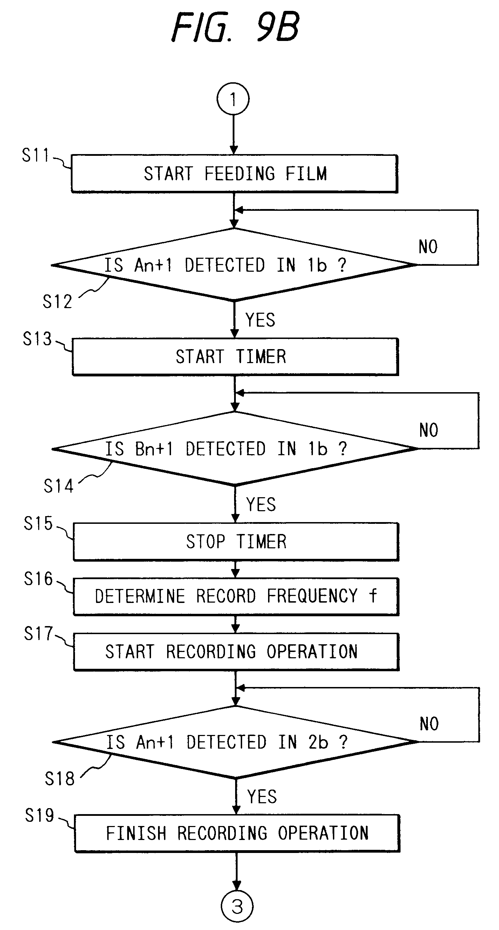

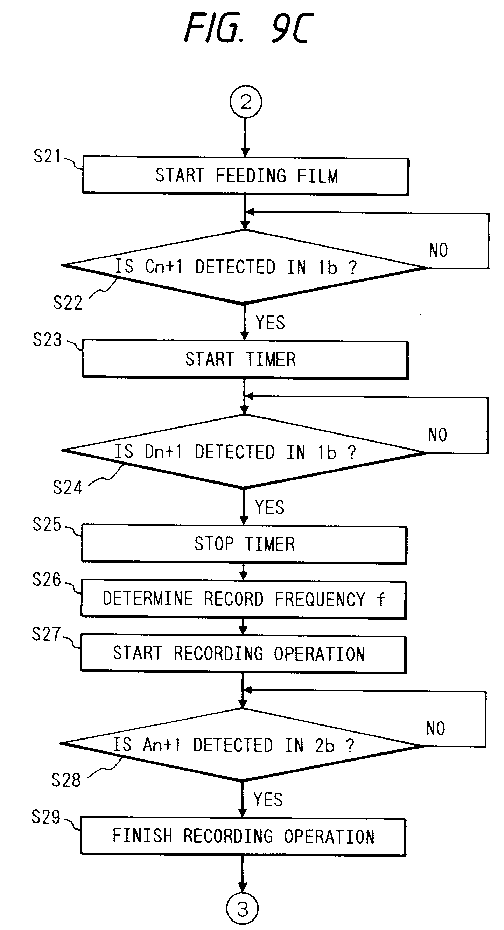

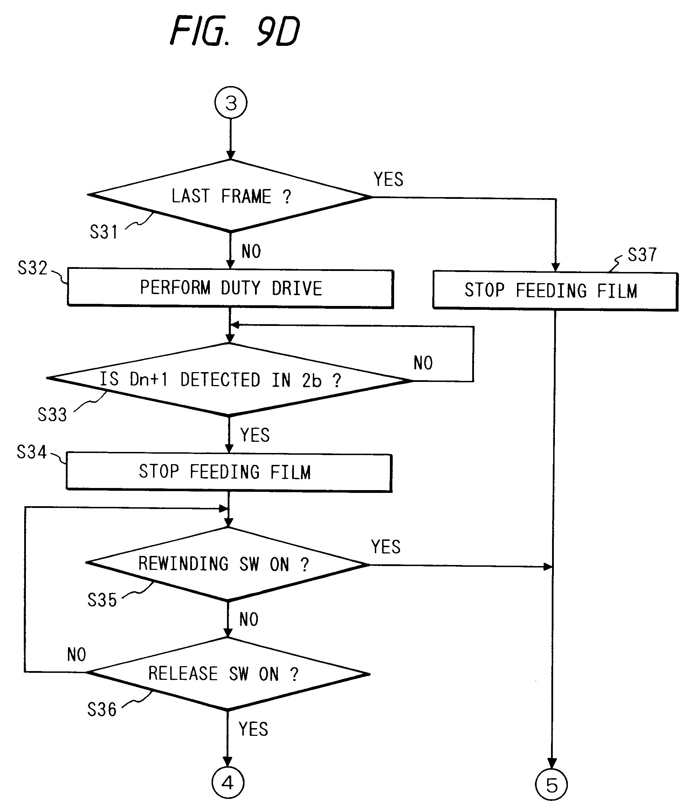

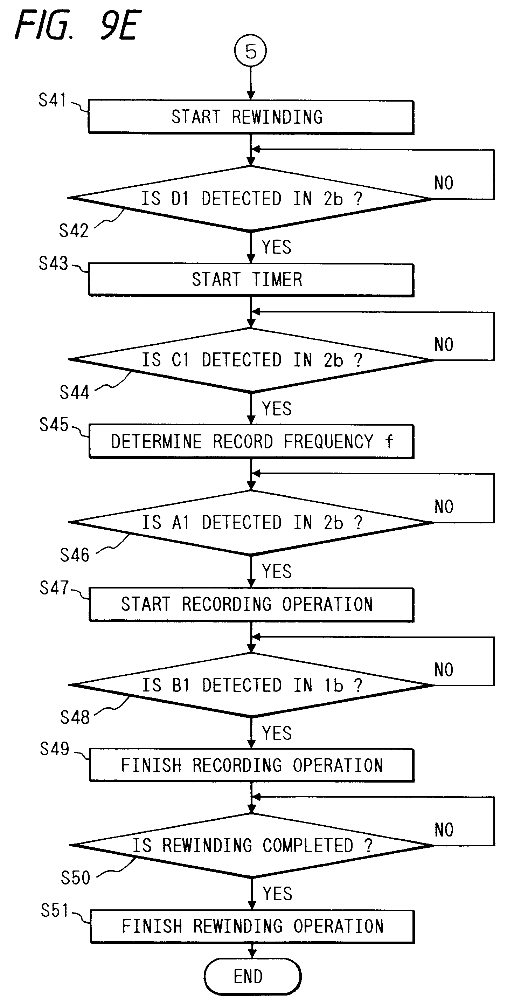

Fig. 9, comprised of Figs. 9A to 9E, is a flowchart showing a control program of a microcomputer 9. The magnetic recording operation in the embodiment will be explained with reference to this flowchart.

The microcomputer 9, when the loading of the film cartridge into the camera is detected by an unillustrated cartridge loading detection switch, starts executing this control program. In step S1, the motor 8a is driven by controlling the driver 8, thereby starting the thrust operation. In step S2, the first frame F1 is set in a predetermined photographing position, and the processing proceeds to step S3, wherein the driving of the motor 8a is finished to stop the feed of the film 10. In step S4, a release operation is performed by a release switch 5, and the processing proceeds to step S5, wherein a series of photographing operations such as mirror driving, shutter driving and exposure control.

In step S6 after finishing the photography, whether or not the number of frames exposed is not more than preset N-pieces of frames is determined. If under the N-pieces of frames, the processing proceeds to step S7. Whereas if over the N-pieces of frames, this implies an abnormal state, and therefore processing goes forward to step S21. In step S7, whether or not an ambient temperature detected by a temperature detection circuit 6 is preset T°C or above is determined. If over T°C, the processing proceeds to step S8. Whereas if under T°C, this implies the abnormal state, and the processing proceeds to step S21. In step S8, there is determined whether or not a battery terminal voltage detected by a battery voltage detection circuit 7 is a preset voltage V (V) or higher. If over the voltage V (V), the processing goes forward to step S11. Whereas if lower than the voltage V (V), this indicates the abnormal state, and the processing proceeds to step S21.

The normal state is present on such conditions that the number of frames exposed is not greater than the N-pieces of frames, the ambient temperature is T°C or higher, and the battery terminal voltage is V (V) or larger. Then, processes in the case of the normal state are to be performed in steps S11 to S19.

In step S11, the motor 8a is driven by controlling the driver 8, and the feed of the film 10 after being photographed is started. Then, the processing proceeds to step S12, wherein there is waited till an edge An+1 is detected in the detection position 1b by the perforation detection circuit 1. When detected, the processing proceeds to step S13, wherein the timer is started. Next in step S14, there is waited till an edge Bn+1 is detected in the detection position 1b by the perforation detection circuit 1. When detected, the processing proceeds to step S15, wherein the timer is stopped. In step S16, the feeding speed of the film 10 is calculated based on the feeding time measured by the timer and the length of the perforation, and there is determined such a magnetic record frequency f that a density of the magnetic record comes to a predetermined value. In subsequent step S17, the magnetic head 3a is driven by controlling the record circuit 3, and there starts the magnetic record of the data about the photography on the magnetic record segment of the film 10. In step S18, there is waited till the edge An+1 is detected in the detection position 2b by the perforation detection circuit 2. When detected, the processing proceeds to step S19. In step S19, if the record operation by the record circuit 3 continues, this record operation is ended, and the processing proceeds to step S31.

On the other hand, if the abnormal state is detected in steps S6 to S8, the processes against the abnormal state are to be executed in steps S21 to S29.

In step S21, the motor 8a is driven by controlling the driver 8, and the feed of the film after the photography is started. Then, the processing proceeds to step S22, wherein there is waited till an edge Cn+1 is detected in the detection position 1b by the perforation detection circuit 1. When detected, the processing proceeds to step S23, wherein the timer is started. Next in step S24, there is waited till an edge Dn+1 is detected in the detection position 1b by the perforation detection circuit 1. When detected, the processing proceeds to step S25, wherein the timer is stopped. In step S26, the feeding speed of the film 10 is calculated based on the feeding time measured by the timer and the length of the perforation, and there is determined such a magnetic record frequency f that the density of the magnetic record comes to the predetermined value. In subsequent step S27, the magnetic head 3a is driven by controlling the record circuit 3, and there starts the magnetic record of the data about the photography on the magnetic record segment of the film 10. In step S28, there is waited till the edge An+1 is detected in the detection position 2b by the perforation detection circuit 2. When detected, the processing proceeds to step S29. In step S29, if the record operation by the record circuit 3 continues, this record operation is finished, and the processing proceeds to step S31.

In step S31, whether the frame is the last frame or not is determined. If the frame is the last frame, the processing proceeds to step S37. Whereas if not, the duty drive of the motor 8a is started by controlling the driver 8 to locate the next frame in a predetermined photographing position in step S32. In subsequent step S33, there is waited till the edge Dn+1 is detected in the detection position 2b by the perforation detection circuit 2. When detected, the processing proceeds to step S34, wherein the driving of the motor 8a is finished to stop the feed of the film 10. In step S35, whether or not an unillustrated rewind switch is operated is determined. When the rewind switch is operated, the processing goes forward to step S41. Whereas if not, the processing proceeds to step S36. In step S36, whether or not the release operation is performed by the release switch 5 is determined. If released, the processing goes back to step S5, wherein the above processes are repeated. Whereas if not released, the processing returns to step S35. On the other hand, in step S37, when finishing the exposed of the last frame, the driving of the motor 8a is ended to stop feeding the film 10, and the processing proceeds to step S41.

When the photographing operations for all the photographing frames are completed, or when rewound during the photography, the data are recorded on the reader segment 10a while rewinding the film 10. Incidentally, there will herein be explained an example where the magnetic record on the reader segment is effected when rewinding the film in the normal wind type camera. As a matter of course, however, the magnetic record can be also performed on the reader segment when thrust as described above.

In step S41, the motor 8a is reversely driven by controlling the driver 8, thus starting rewinding the film 10. In subsequent step S42, there is waited till the perforation detection circuit 2 detects the edge D1 of the reader segment 10a in the detection position 2b. When detected, the processing proceeds to step S43, wherein the timer is started. In step S44, there is waited till the perforation detection circuit 2 detects the edge C1 in the detection position 2b. When detected, the processing proceeds to step S45, wherein the timer is stopped, and, at the same time, a film feeding speed is calculated based on the feeding time measured by the timer and the length of the perforation. Then, there is determined such a magnetic record frequency f that the density of the magnetic record becomes the predetermined value. In step S46, there is waited till the edge A1 is detected in the detection position 2b. When detected, the processing goes forward to step S47, wherein the magnetic record on the magnetic record area of the reader segment 10a is started at the frequency f by controlling the record circuit 3. As described above, when the data are magnetically recorded on the reader segment 10a during the rewinding operation in the normal wind type camera, the data to be recorded are temporarily stored in the memory 4 and recorded by reading the last item of data. In step S48, there is waited till the perforation detection circuit 1 detects the edge B1 in the detection position 1b. When detected, the processing proceeds to step S49. If the magnetic recording operation by the record circuit 3 continues, this recording operation is finished. In step S50, a completion of rewinding is waited. When the rewinding is completed, the processing proceeds to step S51, wherein the drive of the motor 8a is ended, thus finishing the rewinding operation.

Note that there is determined whether the status is normal or not is determined in the sequence of the frame number, the ambient temperature and the battery voltage, but the determination sequence is not confined to that in the above-discussed embodiment.

Further, if one of the frame number, the ambient temperature and the battery voltage deviates from the set value, this is determined as the abnormal state, and the start-of-magnetic-record timing is delayed in the above-discussed embodiment. However, the start-of-magnetic-record timing may be changed depending on a combination of the three conditions. For example, when the battery voltage is a set value or under, and when the frame number is a set value or greater, the start-of-record timing is delayed. Further, when the ambient temperature is a set value or under, and when the frame number is the set value or above, the start-of-record timing is delayed. In this case, it is required that a combination optical to each camera be selected depending on the camera specifications such as, e.g., the number of batteries for use, a gear construction and so on. Moreover, the set values of the respective conditions are required to be set to those optical to the respective cameras.

In the embodiment discussed above, one set value is provided for each of the frame number, the ambient temperature and the battery voltage, but a plurality of set values may also be provided for each condition. For instance, two set values are set for the battery voltage, and, if the battery voltage is a first set value or greater, the magnetic record is started at the timing when the edge B passes the detection position 1b of the perforation. If the battery voltage is smaller than the first set value but equal to a second set value or above, the magnetic record is started at the timing when the edge C passes the detection position 1b. If the battery voltage is smaller than the second set value, the magnetic record is started at the timing when the edge D passes the detection position 1b. Furthermore, a plurality of set values are similarly provided for each of the frame number and the ambient temperature, and the start-of-magnetic-record timing optical to each condition is to be determined.

Moreover, the start-of-magnetic-record timing may be continuously changed in accordance with physical quantities relative to the film feeding speed such as the frame number, the ambient temperature and the battery voltage. In this instance, the timer manages a time till the magnetic record is started since a fiducial perforation edge has been detected, and a set time of the timer may be determined based on the relative-to-the-feeding-speed physical quantities and the feeding speed as well.

In accordance with the embodiment discussed above, the explanation has been given by exemplifying the ambient temperature, the frame number existing in the predetermined photographing position and the battery terminal voltage as the physical quantities relative to the film feeding speed. The physical quantities pertaining to the film feeding speed are not confined to those in the above embodiment but may be any kind of physical quantities on condition that they exert influences on the film feeding speed.

The embodiment discussed above has dealt with the so-called normal wind type camera in which the film is wound up frame by frame on the mechanism of the camera. The present invention is, however, applicable to a so-called prewind type camera in which the film is all wound up on the mechanism of the camera from the cartridge in advance of the photographing, and the exposure is effected while rewinding the film back into the cartridge frame by frame. In this case, the detection positions 1b, 2b of the photo interrupters 1a, 2a and the record position 3b of the magnetic head 3a may be changed to positions showing a bilateral symmetry, and part of the control program shown in Fig. 9 may be modified for prewinding.

Therefore, it is intended that the invention not be limited to the preferred embodiments described herein, but that the invention will include all embodiments falling within the scope of the appended claims.

**Claims**

1.  An apparatus magnetically recording data on a reader segment of a film formed with perforations, comprising:

    a feeding unit for feeding the film;

    a perforation detecting unit for detecting the perforation;

    a timing determining unit for determining a timing of recording the data on the reader segment of the film when said feeding unit feeds the film on the basis of a result of the perforation detection by said perforation detecting unit; and

a magnetic recording unit for magnetically recording the data on the reader segment of the film at the timing determined by said timing determining means.

2. The apparatus according to claim 1, wherein the film is accommodated in a film cartridge,

said feeding unit has a take-up spool,

said perforation detecting unit includes a first perforation detection circuit disposed on the side of said film cartridge on the basis of a predetermined position and a second perforation detection unit disposed on the side of the take-up spool on the basis of the predetermined position,

said timing determining unit determines a start-of-record timing when rewinding the film on the basis of a result of the detection by said second perforation detection circuit and determines an end-of-record timing when rewinding the film on the basis of a result of the detection by said first perforation detection circuit, and

said magnetic recording unit magnetically records the data on the reader segment of the film when rewinding the film at a timing determined by said timing determining means.

3. The apparatus according to claim 2, wherein said timing determining unit determines a start-of-record timing when rewinding the film on the basis of a result of the detection by said first perforation detection circuit and determines an end-of-record timing when rewinding the film on the basis of a result of the detection by said second perforation detection circuit, and

said magnetic recording unit magnetically records the data on a principal portion of the film when rewinding the film at a timing determined by said timing determining means.

4. The apparatus according to claim 2, wherein said timing determining unit detects a speed of rewinding the film on the basis of a result of the detection by said second perforation detection circuit and determines a frequency of recording the data on the basis of the rewinding speed.

5. The apparatus according to claim 4, wherein said timing determining unit determines a start-of-record timing when rewinding the film on the basis of a result of the detection by said first perforation detection circuit and determines an end-of-record timing when rewinding the film on the basis of a result of the detection by said second perforation detection circuit, and

said magnetic recording unit magnetically records the data on the principal portion of the film when rewinding the film at a timing determined by said timing determinating means.

6. A method of magnetically recording data on a film formed with perforations and having a number of frames, comprising sensing the perforations of the film to determine the start and end of recording positions, and recording data magnetically on the reader segment which is located at the start or end of the frames on the film.

## *FIG. 1*

```
       1                          9                          6
  ┌─────────────┐         ┌──────────────┐         ┌─────────────┐
  │ NO. 1       │         │              │         │ TEMPERATURE │      6a
1a│ PERFORATION │         │              │         │ DETECTION   │    ┌───┐
┌─┐│ DETECTING  │─────────│              │─────────│ CIRCUIT     │────│ S │
│PI││ CIRCUIT    │         │              │         │             │    └───┘
└─┘└─────────────┘         │              │         └─────────────┘

       2                   │              │                7
  ┌─────────────┐         │              │         ┌─────────────┐
2a│ NO. 2       │         │              │         │ BATTERY     │
┌─┐│ PERFORATION │         │              │         │ VOLTAGE     │
│PI││ DETECTING  │─────────│              │─────────│ DETECTION   │
└─┘│ CIRCUIT    │         │              │         │ CIRCUIT     │
  └─────────────┘         │ MICROCOMPUTER│         └─────────────┘

       3                   │              │                8
3a ┌─────────────┐         │              │         ┌─────────────┐      8a
┌──┐│ RECORDING  │         │              │         │             │    ┌───┐
│MH││ CIRCUIT    │─────────│              │─────────│ DRIVER      │────│ M │
└──┘└─────────────┘         │              │         │             │    └───┘
                           │              │         └─────────────┘
       4                   │              │
  ┌─────────────┐         │              │
  │             │         │              │
  │ MEMORY      │─────────│              │
  │             │         │              │
  └─────────────┘         │              │
                           │              │
       5                   │              │
  ───o  o──────────────────│              │
  ─┴─                      └──────────────┘
```

## FIG. 2

WINDING DIRECTION

## FIG. 3

# FIG. 4

REWINDING DIRECTION ⟶

## FIG. 7A

## FIG. 7B

## FIG. 7C

FIG. 5A

WINDING DIRECTION

FIG. 5B

FIG. 5C

FIG. 5D

FIG. 5E

FIG. 6A

FIG. 6B

FIG. 6C

FIG. 6D

WINDING DIRECTION
(THRUSTING DIRECTION)

FIG. 8A

10a   2b   1b

PA

3b

F1   F2

FIG. 8B

10a   2b   1b

PA

3b

F1   F2

FIG. 8C

10a   2b   1b

F1   F2

3b

# FIG. 9A

# FIG. 9

| FIG. 9A |
| FIG. 9B |
| FIG. 9C |
| FIG. 9D |
| FIG. 9E |

```
                    ( START )
                        │
S1 ──  [ START THRUSTING ]
                        │
                        ▼←─────────┐
          < FIRST FRAME ? >   NO ──┘
S2                     │
                      YES
                        │
S3 ──  [ STOP FILM FEEDING ]
                        │
                        ▼←─────────┐
          < RELEASE SW ON ? >  NO ─┘
S4                     │
                      YES ←───────── (4)
                        │
S5 ──  [ PERFORM PHOTOGRAPHING ]
                        │
       < IS NUMBER OF FRAMES NOT
         MORE THAN N-PIECES
         OF FRAMES ? >          NO ──┐
S6                     │             │
                      YES            │
                        │            │
       < IS TEMPERATURE NOT SMALLER
         THAN T° ? >             NO ─┤
S7                     │             │
                      YES            │
                        │            │
       < IS BATTERY VOLTAGE NOT
         SMALLER THAN V (V) ? >  NO ─┤
S8                     │             │
                      YES            │
                        │            │
                       (1)          (2)
```

# FIG. 9B

①

S11 — START FEEDING FILM

S12 — IS An+1 DETECTED IN 1b ? — NO

YES

S13 — START TIMER

S14 — IS Bn+1 DETECTED IN 1b ? — NO

YES

S15 — STOP TIMER

S16 — DETERMINE RECORD FREQUENCY f

S17 — START RECORDING OPERATION

S18 — IS An+1 DETECTED IN 2b ? — NO

YES

S19 — FINISH RECORDING OPERATION

③

# FIG. 9C

```
                            ( 2 )
                              │
                              ▼
S21 ┌──────────────────────────────────────────┐
    │          START FEEDING FILM               │
    └──────────────────────────────────────────┘
                              │
                              ▼◄──────────────────────┐
         ◇─────────────────────────────◇             │
    ◇────      IS Cn+1 DETECTED IN 1b ?      ────◇ NO │
         ◇─────────────────────────────◇ ────────────┘
S22              │ YES
                 ▼
S23 ┌──────────────────────────────────────────┐
    │             START TIMER                    │
    └──────────────────────────────────────────┘
                              │
                              ▼◄──────────────────────┐
         ◇─────────────────────────────◇             │
    ◇────      IS Dn+1 DETECTED IN 1b ?      ────◇ NO │
         ◇─────────────────────────────◇ ────────────┘
S24              │ YES
                 ▼
S25 ┌──────────────────────────────────────────┐
    │             STOP TIMER                     │
    └──────────────────────────────────────────┘
S26 ┌──────────────────────────────────────────┐
    │       DETERMINE RECORD FREQUENCY f        │
    └──────────────────────────────────────────┘
S27 ┌──────────────────────────────────────────┐
    │        START RECORDING OPERATION          │
    └──────────────────────────────────────────┘
                              │
                              ▼◄──────────────────────┐
         ◇─────────────────────────────◇             │
    ◇────      IS An+1 DETECTED IN 2b ?      ────◇ NO │
         ◇─────────────────────────────◇ ────────────┘
S28              │ YES
                 ▼
S29 ┌──────────────────────────────────────────┐
    │        FINISH RECORDING OPERATION         │
    └──────────────────────────────────────────┘
                              │
                              ▼
                            ( 3 )
```

## FIG. 9D

```
                    ( 3 )
                      │
                      ▼
              ┌───────────────┐   YES
       S31    │  LAST FRAME ? │──────────────────────┐
              └───────────────┘                      │
                      │ NO                            │
              ┌───────────────┐            S37  ┌──────────────────┐
       S32    │ PERFORM DUTY  │                 │ STOP FEEDING FILM│
              │    DRIVE      │                 └──────────────────┘
              └───────────────┘                       │
                      │◄────────────┐                 │
              ┌────────────────────┐   NO             │
              │ IS Dn+1 DETECTED   │────────┐         │
       S33    │     IN 2b ?        │        │         │
              └────────────────────┘        │         │
                      │ YES                  │         │
              ┌───────────────┐              │         │
       S34    │ STOP FEEDING  │              │         │
              │    FILM       │              │         │
              └───────────────┘              │         │
           ┌─────────►│◄───────────┐         │         │
              ┌───────────────┐   YES         │         │
              │ REWINDING SW  │───────────────┼─────────┤
       S35    │    ON ?       │               │         │
              └───────────────┘               │         │
                      │ NO                     │         │
        NO    ┌───────────────┐                │         │
      ◄───────│ RELEASE SW ON?│                │         │
       S36    └───────────────┘                │         │
                      │ YES                     │         │
                      ▼                          ▼
                    ( 4 )                       ( 5 )
```

# FIG. 9E

⑤

S41 — START REWINDING

IS D1 DETECTED IN 2b ? — NO
S42

YES

S43 — START TIMER

IS C1 DETECTED IN 2b ? — NO
S44

YES

S45 — DETERMINE RECORD FREQUENCY f

IS A1 DETECTED IN 2b ? — NO
S46

YES

S47 — START RECORDING OPERATION

IS B1 DETECTED IN 1b ? — NO
S48

YES

S49 — FINISH RECORDING OPERATION

IS REWINDING COMPLETED ? — NO
S50

YES

S51 — FINISH REWINDING OPERATION

END

European Patent
Office

**EUROPEAN SEARCH REPORT**

Application Number

EP 95 30 4814

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| D,X | PATENT ABSTRACTS OF JAPAN vol. 17 no. 166 (P-1514) ,30 March 1993 & JP-A-04 328536 (CANON) 17 November 1992, | 1 | G03B17/24 |
| A | * abstract * | 2,6 | |
| A | PATENT ABSTRACTS OF JAPAN vol. 18 no. 362 (P-1766) ,7 July 1994 & JP-A-06 095241 (OLYMPUS OPTICAL) 8 April 1994, * abstract * | 1,2,6 | |
| A | PATENT ABSTRACTS OF JAPAN vol. 17 no. 498 (P-1609) ,8 September 1993 & JP-A-05 127252 (RICOH) 25 May 1993, * abstract * | 1,2,6 | |
| A | PATENT ABSTRACTS OF JAPAN vol. 17 no. 70 (P-1485) ,12 February 1993 & JP-A-04 276729 (FUJI PHOTO FILM) 1 October 1992, * abstract * | 1,2,6 | TECHNICAL FIELDS SEARCHED (Int.Cl.6) G03B |

The present search report has been drawn up for all claims

| Place of search | Date of completion of the search | Examiner |
|---|---|---|
| THE HAGUE | 3 November 1995 | Romeo, V |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)